(19) **Europäisches Patentamt / European Patent Office / Office européen des brevets**

(11) **EP 1 358 732 B2**

(12) **NOUVEAU FASCICULE DE BREVET EUROPEEN**
Après la procédure d'opposition

(45) Date de publication et mention de la décision concernant l'opposition:
**30.05.2012 Bulletin 2012/22**

(45) Mention de la délivrance du brevet:
**07.11.2007 Bulletin 2007/45**

(21) Numéro de dépôt: **02703660.7**

(22) Date de dépôt: **06.02.2002**

(51) Int Cl.:
**H04L 9/06** (2006.01)

(86) Numéro de dépôt international:
**PCT/FR2002/000453**

(87) Numéro de publication internationale:
**WO 2002/063821 (15.08.2002 Gazette 2002/33)**

(54) **PROCEDE DE CRYPTAGE SECURISE ET COMPOSANT UTILISANT UN TEL PROCEDE DE CRYPTAGE**

VERFAHREN ZUR GESICHERTEN VERSCHLÜSSELUNG UND BAUSTEIN ZUR AUSFÜHRUNG EINES SOLCHEN VERSCHLÜSSELUNGSVERFAHRENS

SECURE ENCRYPTION METHOD AND COMPONENT USING SAME

(84) Etats contractants désignés:
**DE FR GB IT**

(30) Priorité: **08.02.2001 FR 0101685**

(43) Date de publication de la demande:
**05.11.2003 Bulletin 2003/45**

(73) Titulaire: **STMicroelectronics**
**92120 Montrouge (FR)**

(72) Inventeurs:
 • **ROMAIN, Fabrice**
  **F-13100 Aix-en-Provence (FR)**
 • **TEGLIA, Yannick**
  **F-13011 Marseille (FR)**

(74) Mandataire: **Casalonga, Axel**
  **Casalonga & Partners**
  **Bayerstrasse 73**
  **80335 München (DE)**

(56) Documents cités:
  **EP-A- 0 981 223     WO-A-00/41356**
  **WO-A-01/08012     FR-A- 2 776 445**

EP 1 358 732 B2

**Description**

La présente invention concerne un procédé sécurisé de calcul cryptographique à clé secrète ou privée. La présente invention concerne également un composant mettant en oeuvre un tel procédé sécurisé. Plus particulièrement, l'invention vise à protéger de tels composants contre une attaque physique ayant pour objectif d'obtenir des informations sur la clé secrète ou privée à partir de la consommation énergétique ou à partir du rayonnement électromagnétique du composant lorsqu'il met en oeuvre le procédé de cryptage.

Les composants concernés par l'invention sont notamment utilisés pour des applications où l'accès aux services et / ou aux données est sévèrement contrôlé. Ces composants ont le plus souvent une architecture formée autour d'un microprocesseur et d'une mémoire de programme comprenant notamment la clé secrète.

De tels composants sont par exemple utilisés dans des cartes à puces, notamment pour des applications de type bancaire, par l'intermédiaire d'un terminal de commande ou à distance.

De tels composants utilisent un ou des procédés de cryptage à clé secrète ou privée pour calculer une donnée de sortie à partir d'une donnée d'entrée. Un tel procédé est par exemple utilisé pour chiffrer, déchiffrer, signer un message d'entrée ou bien vérifier la signature dudit message d'entrée.

Pour assurer la sécurité des transactions, les procédés de cryptage à clé secrète ou privée sont construits de sorte qu'il ne soit pas possible de déterminer la clé secrète utilisée à partir de la connaissance de la donnée d'entrée et / ou de la donnée de sortie de l'algorithme. Cependant, la sécurité d'un composant repose sur sa capacité à maintenir cachée la clé secrète qu'il utilise.

Un procédé fréquemment utilisé est le procédé de type DES (pour *Data Encryption Standard*). Il permet par exemple de fournir un message chiffré MS (ou donnée de sortie) codé sur 64 bits, à partir d'un message clair ME (ou donnée d'entrée) également codé sur 64 bits et d'une clé secrète $K_0$ de 56 bits.

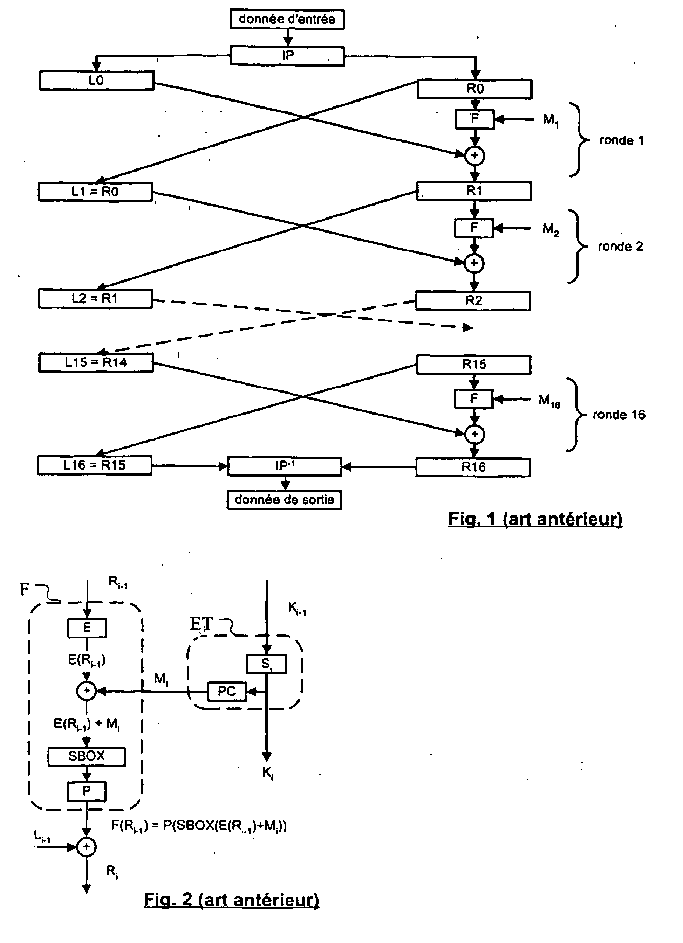

Les principales étapes du procédé DES sont détaillées sur la figure 1. Après une permutation initiale IP, le bloc formé des bits de la donnée d'entrée permutés, est séparé en une partie gauche $L_0$ et une partie droite $R_0$.

Après cela, 16 rondes d'opérations identiques sont réalisées. Lors de chaque ronde d'opérations, la partie droite ($R_0$, ..., $R_{15}$) d'une donnée intermédiaire calculée lors de la précédente ronde d'opérations est mélangée avec une clé dérivée ($M_1$, ..., $M_{16}$) de la clé secrète. Le mélange se fait au cours d'une transformation dite transformation F. Le résultat de la transformation F est ensuite additionné (par un opérateur OU-Exclusif) à la partie gauche ($L_0$, ..., $L_{15}$) de la donnée intermédiaire calculée lors de la précédente ronde d'opérations.

Après la 16$^{\text{ème}}$ ronde d'opérations, les parties gauche $L_{16}$ et droite $R_{16}$ de la 16$^{\text{iéme}}$ donnée intermédiaire sont assemblées et une permutation finale IP$^{-1}$, inverse de la permutation initiale IP, termine le procédé.

Une ronde d'opérations de rang i compris entre 1 et 16 est détaillée sur la figure 2. Au cours d'une étape de calcul de clé ET, les 56 bits d'une clé intermédiaire $K_{i-1}$ calculée lors de la ronde précédente sont décalés (opération $S_i$) pour fournir une nouvelle clé intermédiaire actualisée $K_i$, puis 48 bits sur 56 sont sélectionnés par une opération PC de permutation / compression pour fournir une clé dérivée $M_i$ : $M_i = PC(K_i) = PC(S_i (K_{i-1}))$.

En parallèle, la transformation F est réalisée. La partie droite $R_{i-1}$ d'une donnée intermédiaire calculée lors de la ronde précédente, est étendue à 48 bits par une expansion (opérateur E), combinée avec la clé dérivée $M_i$ par une opération de type OU-Exclusif, remplacée par 32 nouveaux bits par une opération de substitution non linéaire (représentée par l'opérateur SBOX) puis permutée une fois de plus (permutation simple P).

Le résultat de la transformation F est ensuite combiné par un OU-Exclusif à la partie gauche $L_{i-1}$ de la donnée intermédiaire ($L_{i-1}$, $R_{i-1}$) calculée lors de la précédente ronde. La combinaison fournit la partie droite $R_i$ d'une donnée intermédiaire actualisée. La partie gauche $L_i$ de la donnée intermédiaire actualisée est quant à elle égale à $R_{i-1}$.

Les opérateurs F, P, E, PC, SBOX sont identiques pour toutes les rondes. Par contre, les opérateurs $S_1$ à $S_{16}$ utilisés lors du calcul des clés dérivées $K_1$ à $K_{16}$ peuvent être différents d'une ronde à l'autre.

Toutes les caractéristiques des opérateurs IP, IP$^{-1}$, P, PC, E, SBOX, $S_i$ utilisés lors de la mise en oeuvre d'un procédé DES sont connues : calculs effectués, paramètres utilisés, etc. Ces caractéristiques sont par exemple décrites de manière détaillée dans la demande de brevet WO 00/46953 ou dans la norme "Data Encryption Standard, FIPS PUB 46" publiée le 15 janvier 1977.

La sûreté d'un composant utilisant un procédé de cryptage à clé secrète ou privée réside dans sa capacité à conserver secrète la clé qu'il utilise.

Pour être sûr, un composant doit notamment être capable de maintenir cachée la clé secrète qu'il utilise lorsqu'il subit une analyse de type DPA (pour *Differential Power Analysis*).

Une analyse DPA consiste à faire une analyse statistique de la consommation du composant, c'est-à-dire de la trace laissée par le composant en fonction du temps. Pour cela, un échantillon d'environ 1000 mesures de traces est utilisé, chaque trace correspondant à des données d'entrée ME[i=1 à 1000] différentes et indépendantes l'une de l'autre. L'étude statistique permet de valider une ou des hypothèses faite sur la valeur des bits de la clé secrète utilisée.

Un exemple concret de mise en oeuvre d'une analyse DPA sur un composant utilisant un procédé de cryptage de type DES, est détaillé dans la publication WO 00/46953, notamment aux pages 3, 4 de cette publication.

Le procédé de cryptage de type DES est notamment sensible aux attaques de type DPA à la sortie des opérateurs SBOX. Plus généralement un procédé de cryptage est sensible à une analyse de type DPA en tout point où la clé secrète apparaît en combinaison soit avec la donnée d'entrée soit avec la donnée de sortie.

Ainsi, dans la pratique, un procédé de type DES est sensible en sortie de tous les opérateurs (OU-Exclusif, P, E, PC, SBOX, etc.) de toutes les rondes d'opérations car la clé secrète est mélangée à la donnée d'entrée dès la première ronde d'opérations.

Par exemple, en connaissant la donnée d'entrée ME, et en faisant des hypothèses sur la clé secrète $K_0$, on peut prédire la valeur d'au moins un bit de la donnée intermédiaire $(L_1, R_1)$ fournie en sortie de la première ronde d'opérations. Si la prédiction est vérifiée, alors l'hypothèse faite sur la clé secrète est vérifiée.

Pour être sûr, un composant doit également être capable de maintenir cachée la clé secrète qu'il utilise lorsqu'il subit une analyse de type SPA (pour *Simple Power Analysis*).

Une analyse SPA consiste à faire exécuter plusieurs fois par le composant le procédé de cryptage qu'il utilise en lui appliquant la même donnée d'entrée ME, et à mesurer, pour chaque exécution du procédé, la trace laissée par cette exécution en fonction du temps. La trace représente par exemple la consommation énergétique du composant ou l'énergie électromagnétique rayonnée en fonction du temps. L'ensemble des mesures est ensuite moyenné pour filtrer le bruit de la mesure et obtenir la trace réelle du circuit pour une donnée d'entrée ME fixée. A titre indicatif, un ensemble de 10 à 100 mesures identiques peut suffire pour filtrer le bruit de la mesure et obtenir la trace réelle du composant pour une donnée d'entrée ME fixée.

Après filtrage, on distingue nettement sur la trace réelle du composant les différentes étapes du procédé DES : permutation initiale IP, 16 rondes d'opérations, puis permutation finale $IP^{-1}$.

Un procédé de type DES est sensible aux analyses de type SPA notamment aux points où la clé secrète apparaît, sous sa forme initiale $K_0$ ou sous une autre forme (clés intermédiaires $K_1$, ..., $K_{16}$, clés dérivées $M_1$, ..., $M_{16}$). En effet, par une analyse de type SPA, il est possible, pour chaque ronde i d'opérations, de déterminer une image de la clé dérivée $M_i$. Par exemple, il est possible d'identifier l'intervalle de temps au cours duquel le transfert de la clé dérivée $M_i$ est réalisé avant l'exécution de l'opération OU-Exclusif. Toutes les clés dérivées $M_1$ à $M_{16}$ étant obtenues à partir de la clé secrète $K_0$ par des opérations connues, la connaissance de simples images des clés dérivées donne une information sur la clé secrète $K_0$.

De manière générale, tous les procédés de cryptage sont plus ou moins sensibles aux attaques de type DPA, notamment aux endroits où un résultat intermédiaire prédictible apparaît, qui est une combinaison de la donnée d'entrée (ou d'une donnée dérivée de la donnée d'entrée) et de la clé secrète ou privée (ou d'une clé obtenue à partir de la clé secrète ou privée) ou bien qui est une combinaison de la donnée de sortie (ou d'une donnée dérivée de la donnée d'entrée) et de la clé secrète (ou d'une clé obtenue à partir de la clé secrète) Un tel résultat intermédiaire est en effet prédictible, à partir de la donnée d'entrée et / ou de la donnée de sortie et à partir d'hypothèses sur la clé utilisée, car les procédés de cryptage utilisés sont connus (opérateurs utilisés, ordre d'utilisation de ces opérateurs, etc.). Une attaque DPA permet alors d'obtenir des informations sur la clé utilisée, en validant les hypothèses faites.

En pratique, tous les procédés sont sensibles en sortie de tous les opérateurs de toutes leurs étapes (ou sous-étapes) utilisant la donnée d'entrée (ou une donnée dérivée de la donnée d'entrée), dès que la donnée d'entrée a été mélangée à la clé secrète une première fois. De la même façon, tous les procédés sont également sensibles en sortie de tous les opérateurs fournissant un résultat dépendant de la donnée de sortie et de la clé secrète ou privée, et ce, dès que la donnée d'entrée a été mélangée une première fois à la clé secrète ou privée.

Le document WO 00/41356 décrit un procédé de contremesure contre une telle attaque comprenant un seul niveau de masquage des données d'entrée.

Egalement, tous les procédés de cryptage utilisant des clés secrètes ou privées sont plus ou moins sensibles aux analyses de type SPA. Leur sensibilité est notamment importante aux endroits où la clé apparaît seule, sous sa forme initiale ou sous sa forme dérivée. En pratique, tous les procédés sont sensibles en sortie d'une étape dite critique, au cours de laquelle la clé secrète est utilisée soit directement soit sous une forme dérivée obtenue par une loi de calcul de clé dérivée connue. Une telle étape critique est par exemple une étape de calcul de clé intermédiaire ou dérivée, à partir de la clé secrète ou privée ou bien à partir d'une clé intermédiaire précédemment calculée.

Un objet de l'invention est de mettre en oeuvre un procédé sécurisé de calcul cryptographique à clé secrète ou privée qui est immunisé contre toute attaque physique de type DPA, c'est-à-dire un procédé sécurisé de calcul cryptographique dont la trace, lors de la mise en oeuvre du procédé, ne donne aucune information sur la clé qu'il utilise, et ce quelle que soit la donnée d'entrée utilisée par le procédé, quel que soit le nombre d'utilisations du procédé, et même si une étude statistique de la trace est réalisée.

Un autre objet de l'invention est de mettre en oeuvre un procédé sécurisé de calcul cryptographique à clé secrète ou privée qui est protégé également contre toute attaque de type SPA.

Avec ces objectifs en vue, l'invention concerne un procédé de calcul cryptographique comprenant N rondes de calcul réalisées successivement pour obtenir une donnée de sortie à partir d'une donnée d'entrée et d'une clef secrète.

Selon l'invention, au cours du procédé :

- on réalise un premier niveau de masquage, pour masquer la donnée d'entrée, de sorte que chaque donnée intermédiaire utilisée ou produite par une ronde de calcul soit masquée, et
- on réalise un deuxième niveau de masquage, pour masquer des données manipulées à l'intérieur de chaque ronde de calcul.

L'invention concerne également un composant électronique comprenant des moyens adaptés pour mettre en oeuvre un procédé tel que celui décrit ci-dessus, et détaillé ci-dessous.

Le mot "masqué" (ou "mélangé") doit être compris ici, et dans tout ce qui suit, dans le sens suivant. Dans un procédé selon l'invention, une donnée, un résultat, un opérande, sont dits masqués s'ils ont une valeur différente lors de deux exécutions du procédé, notamment lors de deux exécutions du procédé utilisant la même donnée d'entrée et la même clé secrète ou privée.

Ainsi, avec l'invention, une donnée produite par une ronde de calcul est masquée car la donnée d'entrée est masquée (premier niveau de masquage) avant la ronde de calcul. Une donnée produite par une ronde de calcul est donc différente à chaque exécution du procédé, même si la donnée d'entrée et la clé secrète utilisées sont identiques.

Par ailleurs, le deuxième niveau de masquage utilisé dans un procédé selon l'invention permet de masquer toute donnée manipulée à l'intérieur d'une ronde de calcul.

Les deux niveaux de masquage utilisés dans l'invention permettent donc de masquer toute donnée manipulée au cours de l'exécution du procédé, à l'extérieur et à l'intérieur des rondes de calcul.

Une étude statistique de la consommation du composant (ou de son rayonnement électromagnétique) utilisant un procédé selon l'invention est donc vouée à l'échec : elle ne permet pas d'obtenir des informations sur la clé secrète utilisée puisque la consommation du composant est décorrélée de la valeur de la clé utilisée.

Pour réaliser le premier niveau de masquage, on réalise de préférence :

- une première étape de masquage ET01 de la donnée d'entrée, réalisée avant une première ronde de calcul,
- une première étape de démasquage ET10 du résultat d'une Nième ronde de calcul, pour produire la donnée de sortie.

Pour réaliser le deuxième niveau de masquage, on réalise de préférence, dans une ronde de calcul de rang i du procédé :

- une deuxième étape de masquage ET3 d'un résultat d'une étape précédente de la ronde de calcul de rang i,
- une étape ET6 de substitution du résultat masqué obtenu par la deuxième étape (ET3), à l'aide d'un opérateur non linéaire masqué SBOX',
- une deuxième étape ET9 de démasquage du résultat de l'étape ET6.

Lors de la première étape de masquage ET01, un premier paramètre de masquage est mélangé à la donnée d'entrée ME, pour fournir une donnée d'entrée masquée à la première ronde de calcul, le mélange étant réalisé par l'utilisation d'un premier opérateur de mélange linéaire.

Pour une sécurisation maximale du procédé, le premier paramètre de masquage est choisi de préférence aléatoirement à chaque mise en oeuvre du procédé lors de l'étape de masquage. Le premier paramètre de masquage peut également être choisi aléatoirement seulement toutes les M mises en oeuvre du procédé. Dans ce cas, le même paramètre de masquage est utilisé pour les M mises en oeuvre suivantes.

La première étape de masquage permet ainsi, en mélangeant la donnée d'entrée à un paramètre aléatoire, de supprimer toute corrélation entre la donnée d'entrée ME et une donnée intermédiaire obtenue à partir de la donnée d'entrée ME, et utilisée ou produite par une ronde de calcul.

Lors de la première étape de démasquage, à la fin du procédé, la contribution apportée par le premier paramètre de masquage au résultat de la $N^{ième}$ ronde de calcul est soustraite du résultat de la $N^{ième}$ ronde de calcul. L'étape de démasquage permet ainsi de retrouver, à la fin du procédé, la donnée de sortie attendue. En particulier, si le procédé est exécuté deux fois avec la même donnée d'entrée et la même clé secrète, alors la donnée de sortie MS obtenue est la même dans les deux cas. Les données intermédiaires sont par contre différentes.

Pour la mise en oeuvre du deuxième niveau de masquage, le procédé comprend également de préférence une troisième étape de masquage ET03, réalisée avant la première ronde de calcul, pour fournir l'opérateur non linéaire SBOX'. SBOX' vérifie la relation suivante, pour toute donnée A :

$$SBOX'(A@X_3) = SBOX(A) \# X_2,$$

où

$X_2$ est un deuxième paramètre de masquage et

$X_3$ est un troisième paramètre de masquage,

SBOX est un opérateur non linéaire connu,

« # » est un deuxième opérateur de mélange et

@ est un troisième opérateur de mélange.

De préférence, au moins un des trois paramètres de masquage utilisés est choisi aléatoirement à chaque mise en oeuvre du procédé, pour obtenir une sécurité maximale.

Selon une variante, un des paramètres de masquage peut être choisi aléatoirement toutes les M mises en oeuvre du procédé.

De préférence encore, les opérateurs de mélange sont des opérateurs linéaires. Dans un exemple, on peut choisir l'opérateur OU - Exclusif pour l'un des opérateurs de mélange.

Si le procédé selon l'invention comprend une étape de calcul de clé dérivée, pour fournir une clé dérivée à partir de la clé secrète selon une loi de calcul de clé connue, alors le procédé est avantageusement complété par l'ajout d'une quatrième étape de masquage, effectuée avant l'étape de calcul de clé dérivée, pour masquer la clé secrète de sorte que la clé dérivée calculée soit différente à chaque mise en oeuvre du procédé.

Ainsi, la (ou les) clé (s) dérivée (s) et / ou la (ou les) clé(s) intermédiaire(s) calculées sont toutes masquées, par l'ajout d'un paramètre aléatoire, de sorte qu'une analyse de consommation du composant, de type SPA par exemple, ne peut fournir aucune indication sur la clé secrète utilisée.

Selon un mode de mise en oeuvre, lors de la quatrième étape de masquage, un paramètre de mélange choisi aléatoirement est mélangé à la clé secrète par l'intermédiaire d'un quatrième opérateur de masquage, pour fournir une clé, secrète masquée, la clé dérivée masquée étant calculée à partir de la clé secrète masquée.

L'invention sera mieux comprise et d'autres caractéristiques et avantages apparaîtront à la lecture de la description qui va suivre d'un exemple de mise en oeuvre d'un procédé de calcul cryptographique protégé selon l'invention. La description est à lire en référence aux dessins annexés dans lesquels :

- la figure 1, déjà décrite, est un diagramme d'un procédé connu de cryptage de type DES utilisant une clé secrète,
- la figure 2, déjà décrite, est un diagramme détaillant une étape du procédé de la figure 1,
- les figures 3a, 3b sont un diagramme du procédé de la figure 1, sécurisé selon l'invention,
- la figure 4 est un diagramme d'une amélioration du procédé des figures 3a, 3b.

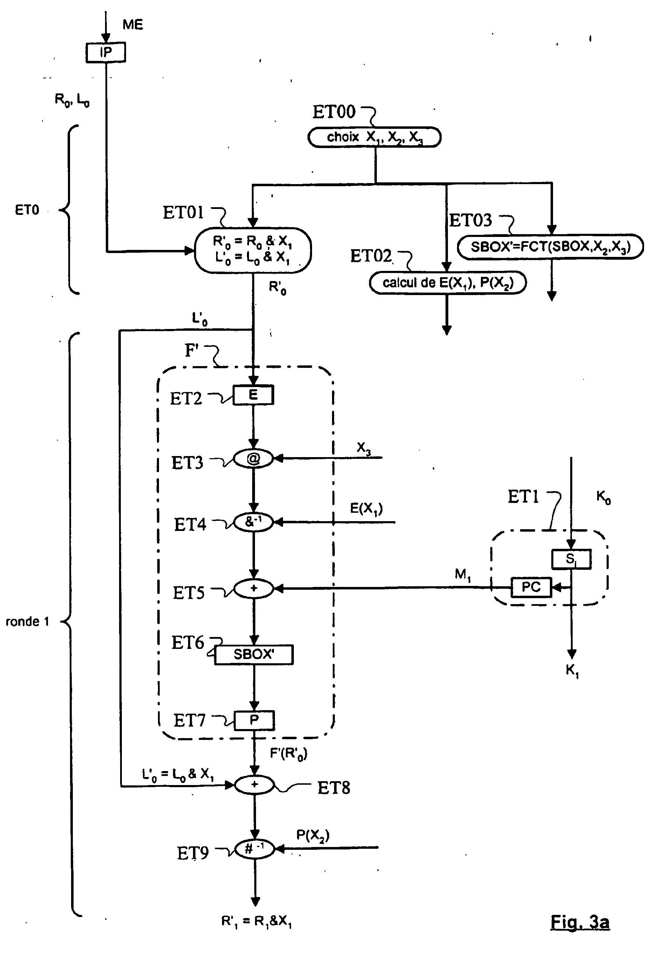

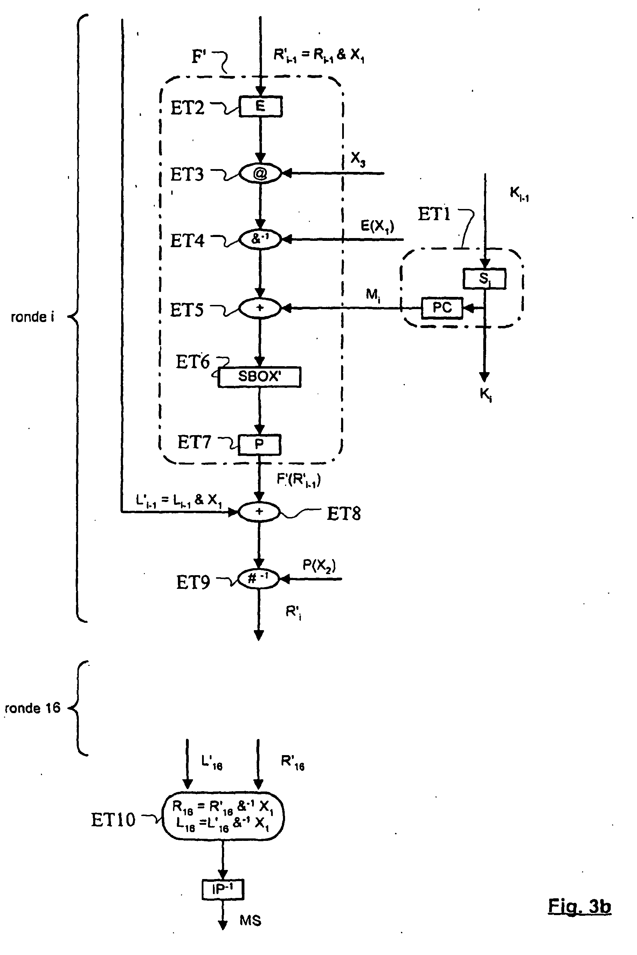

Les figures 3a, 3b montrent comment le procédé DES des figures 1, 2 est sécurisé selon l'invention.

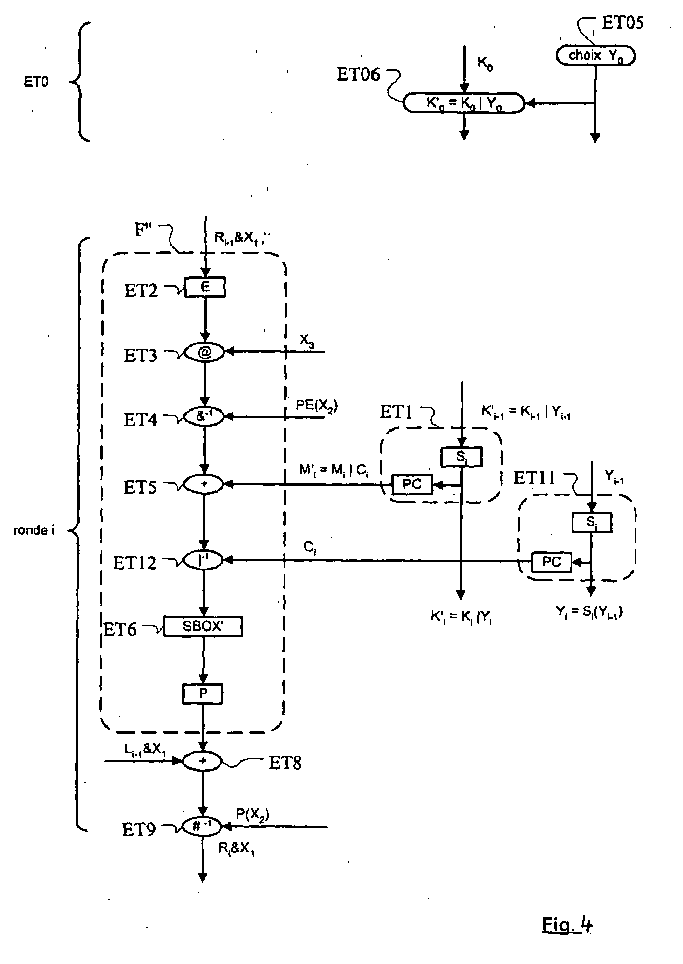

Par souci de clarté et de simplification, seules la 1$^{ère}$ et la i$^{ème}$ rondes d'opérations, ont été représentées sur les figures 4a, 4b, avec les étapes caractéristiques de la présente invention, i étant un entier compris entre 1 et 16.

Comme on l'a vu précédemment, un procédé DES calcule une donnée de sortie MS à partir d'une clé secrète $K_0$ et d'une donnée d'entrée ME ; Le procédé DES comprend 16 rondes de calcul, précédées d'une permutation d'entrée IP (figure 3a) et suivies d'une permutation de sortie IP$^{-1}$ (figure 3b), inverse de la permutation d'entrée. Chaque ronde-d'opérations comprend notamment (figure 2) une étape de calcul de clé dérivée ET1, une étape F' de transformation et une étape de combinaison par un OU-Exclusif ET8.

Le procédé DES est sécurisé selon l'invention par l'ajout de deux niveaux de masquage. Le premier niveau de masquage est réalisé par une étape de masquage ET01 (figure 3a) et d'une étape de démasquage ET10 (figure 3b). Le deuxième niveau de masquage est réalisé, à chaque ronde de calcul, par une étape de masquage ET3, une étape ET6 de substitution par un opérateur non linéaire masqué SBOX' et une étape de démasquage ET9.

Dans l'exemple des figures 3a, 3b, le procédé comprend une étape d'initialisation ET0 qui se décompose en quatre sous étapes ET00 à ET03. L'étape d'initialisation a pour but de réaliser le premier niveau de masquage (étape ET01 :masquage de la donnée d'entrée ME), et de préparer le deuxième niveau de masquage (calcul de l'opérateur non linéaire SBOX') qui est ensuite réalisé à chaque ronde de calcul.

Au cours de l'étape ET00, trois paramètres de masquage $X_1$, $X_2$, $X_3$ sont choisis de manière aléatoire; ils sont modifiés par exemple, à chaque mise en oeuvre du procédé. Ils peuvent également être modifiés seulement toutes les M mises en oeuvre.

Au cours de l'étape ET01, les parties gauche et droite de la donnée d'entrée sont séparées puis masquées par le paramètre $X_1$, pour fournir ainsi une partie gauche masquée $L'_0 = L_0$ & $X_1$ et une partie droite $R'_0 = R_0$ & $X_1$. Le masquage est réalisé par l'intermédiaire du premier opérateur de masquage "&".

L'opérateur "&" est choisi linéaire par rapport aux deux variables qu'il mélange. Dans un mode de réalisation, l'opérateur " & " est un OU-Exclusif. L'opérateur " & " peut également être tout type d'opérateur linéaire. De manière générale, l'opérateur " & " a les propriétés suivantes, quelles que soient les données A, B, C :

* " & " est d' arité deux : il prend deux arguments en paramètres,
* "&" vérifie : E(A & B) = E (A) & E(B), E étant un opérateur linéaire,

* " & " vérifie (A ⊕ B) & C = A ⊕ (B&C), ⊕ étant l'opérateur OU-Exclusif,
* il existe un opérateur " &$^{-1}$ ", inverse de " & ", tel que (A & B) &$^{-1}$ A = B, éventuellement " & " et " &$^{-1}$ " sont identiques.

Au cours de l'étape ET02, des variables VX1 = $E(X_1)$, VX2 = $P(X_2)$ sont calculées. Les opérateurs E, P sont respectivement une expansion, et une permutation simple, telles que définies dans le procédé de type DES connu.

Au cours de l'étape ET03, un nouvel opérateur non linéaire SBOX' est calculé par la relation :

$$\texttt{SBOX' = FCT(SBOX, X}_\texttt{2}\texttt{, X}_\texttt{3}\texttt{)}$$

où SBOX est l'opérateur non linéaire utilisé dans un procédé DES connu, $X_2$, $X_3$ sont les paramètres aléatoires, et FCT est une fonction telle que :

$$\texttt{SBOX'[A@X}_\texttt{3}\texttt{] = SBOX[A] \# X}_\texttt{2}\texttt{,}$$

pour tout A.

"@ ", " # " sont des opérateurs de mélange linéaires, ayant des propriétés similaires à celles de l'opérateur " & ". " @ ", " # " peuvent être différents l'un de l'autre, ils peuvent également être différents de l'opérateur " & ".

La première ronde d'opérations est ensuite réalisée; elle se décompose en neuf étapes ET1 à ET9.

Au cours de l'étape ET1 de calcul de clé, une clé dérivée $M_1$ est calculée à partir de la clé secrète $K_0$. La première' clé dérivée $M_1$ actualisée est donnée par la relation : $M_1 = PC(S_1(K_0)) = PC(K_1)$. $K_1$ est une première clé intermédiaire actualisée, qui sera fournie par la suite à la deuxième ronde d'opérations (non représentée sur les figures 4a, 4b). Les opérateurs PC, $S_1$ sont respectivement une permutation -compression et une opération de, décalage de bits telles que définies dans le cas d'un procédé DES connu. L'étape ET1 est ainsi identique à une étape de calcul de clé telle que définie dans le cadre d'un procédé DES connu.

Les étapes suivantes ET2 à ET8 forment une étape de transformation F', qui correspond à la transformation F d'un procédé connu, modifiée par l'ajout des étapes ET3, ET4 et le remplacement de l'opérateur SBOX par le nouvel opérateur SBOX' selon l'invention.

Au cours de l'étape ET2, une expansion est réalisée sur la donnée $R'_0$.

Le résultat $E(R'_0)$ de cette opération est ensuite mélangé au paramètre $X_3$ par l'intermédiaire du deuxième opérateur de masquage " @ ".

L'étape ET4 suivante est une première étape de démasquage, qui vise à supprimer du résultat de l'opération précédente, la contribution à ce résultat apportée par le paramètre de masquage $X_1$. Pour cela, l'opération suivante est réalisée :

$$
\begin{aligned}
\texttt{[E(R'}_\texttt{0}\texttt{)@X}_\texttt{3}\texttt{]\&}^\texttt{-1}\texttt{VX}_\texttt{1} &= \texttt{[E(R'}_\texttt{0}\texttt{)@X}_\texttt{3}\texttt{]\&}^\texttt{-1}\texttt{E(X}_\texttt{1}\texttt{)} \\
&= \texttt{E(R}_\texttt{0}\texttt{)\&E(X}_\texttt{1}\texttt{)@X}_\texttt{3}\texttt{\&}^\texttt{-1}\texttt{E(X}_\texttt{1}\texttt{)} \\
&= \texttt{E(R}_\texttt{0}\texttt{)@X}_\texttt{3}
\end{aligned}
$$

Lors de l'étape ET5 suivante, le résultat de l'étape précédente ET4 est mélangé à la clé dérivée actualisée $m_1$ par un OU-Exclusif. L'étape ET5 fournit ainsi le résultat :

$$\texttt{E(R}_\texttt{0}\texttt{)@X}_\texttt{3}\texttt{⊕M}_\texttt{1}\texttt{ = E(R}_\texttt{0}\texttt{)⊕M}_\texttt{1}\texttt{@X}_\texttt{3}\texttt{.}$$

Au cours de l'étape ET6, l'opération non linéaire SBOX' est réalisée sur le résultat de l'opération précédente. L'étape ET6 fournit le résultat :

$$\texttt{SBOX'[E(R}_\texttt{0}\texttt{)⊕M}_\texttt{1}\texttt{@X}_\texttt{3}\texttt{] = SBOX[E(R}_\texttt{0}\texttt{)⊕M}_\texttt{1}\texttt{]\#X}_\texttt{2}\texttt{ .}$$

Ceci résulte de la définition même de l'opérateur non-linéaire SBOX'.

Une opération P de permutation de bits est ensuite appliquée à ce résultat (étape ET7). On obtient ainsi :

$$F'(R'_0) = P[SBOX[E(R_0) \oplus M_1] \# X_2]$$
$$= P[SBOX[E(R_0) \oplus M_1]] \# P(X_2).$$

Ce dernier résultat se déduit simplement du fait de la linéarité de l'opérateur P.

Au cours de l'étape ET8, le résultat de la permutation P est ensuite ajouté (par l'intermédiaire d'un OU-Exclusif) à la donnée $L'_0$ calculée au cours de l'étape ET01. L'étape ET8 est similaire à l'étape correspondante d'un procédé DES connu. On obtient alors :

$$P[SBOX[E(R_0) \oplus M_1]] \# P(X_2) \oplus L'_0$$
$$= [P(SBOX[E(R_0) \oplus M_1]) \# P(X_2)] \oplus L_0 \ \& \ X_1$$
$$= [P[SBOX[E(R_0) \oplus M_1]] \oplus L_0] \ \& \ X_1 \ \# \ P(X_2)$$
$$= R_1 \ \& \ X_1 \ \# \ P(X_2)$$

où $R_1$ est la partie droite de la première donnée intermédiaire $(L_1, R_1)$ telle que définie dans le cadre du procédé de type DES connu. Là encore, toutes les inégalités ci-dessus se déduisent du fait de la linéarité des opérateurs P, &, #.

L'étape ET9 suivante est une deuxième étape de démasquage, qui vise à supprimer du résultat de l'opération précédente, la contribution à ce résultat apportée par le paramètre de masquage $X_2$. Pour cela, l'opération suivante est réalisée :

$$[R_1 \& X_1 \# P(X_2)] \& VX_2 = [R_1 \& X_1 \# P(X_2)] \#^{-1} P(X_2) = R_1 \& X_1$$

A la fin de la première ronde, la donnée intermédiaire actualisée fournie est égale à $(L'_1, R'_1)$, avec : $L'_1 = R'_0 = R_0 \& X_1 = L_1 \& X_1$, et $R'_1 = R_1 \& X_1$.

Ainsi, avec le procédé DES selon l'invention, la donnée intermédiaire $(L'_1, R'_1)$ calculée lors de la première ronde d'opérations est égale à la donnée intermédiaire $(L_1, R_1)$ fournie par un procédé de type DES connu non sécurisé, masquée par le paramètre aléatoire $X_1$ par l'intermédiaire de l'opérateur "&".

La deuxième ronde est ensuite effectuée, en utilisant la nouvelle donnée intermédiaire $(L'_1, R'_1)$ actualisée ainsi que la clé intermédiaire actualisée $K_1$ calculée lors de l'étape ET1.

De manière générale, la $i^{ème}$ ronde d'opérations du procédé se décompose en neuf étapes ET1 à ET9.

Au cours de l'étape ET1, une clé dérivée $M_i$ est calculée à partir d'une clé intermédiaire $K_{i-1}$, calculée lors de la ronde précédente, pour fournir une clé dérivée actualisée $M_i = PC(S_i(K_{i-1})) = PC(K_i)$. $K_i$ est une $i^{ème}$ intermédiaire actualisée, qui sera fournie par la suite à la ronde d'opérations suivante (non représentée sur les figures 4a, 4b). Les opérateurs PC, $S_i$ sont respectivement une permutation -compression et une opération de décalage de bits telles que définies dans le cas d'un procédé DES connu.

Au cours de l'étape ET2, l'expansion est réalisée sur la donnée $R'_{i-1}$.

Le résultat $E(R'_{i-1})$ de cette opération est ensuite mélangé au paramètre $X_3$ par l'intermédiaire du deuxième opérateur de masquage " @ ".

Au cours de l'étape ET4, l'opération suivante est réalisée :

$$[E(R'_{i-1}) @ X_3] \&^{-1} VX_1 = [E(R'_{i-1}) @ X_3] \&^{-1} E(X_1)$$
$$= E(R_{i-1}) \& E(X_1) @ X_3 \&^{-1} E(X_1)$$
$$\approx E(R_{i-1}) @ X_3$$

Lors de l'étape ET5 suivante, le résultat de l'étape ET4 est mélangé à la clé dérivée actualisée $M_i$ par un OU-

Exclusif. L'étape ET5 fournit ainsi le résultat :

$$E(R_{i-1})@X_3 \oplus M_i = E(R_{i-1}) \oplus M_i @ X_3.$$

Au cours de l'étape ET6, l'opération non linéaire SBOX' est réalisée sur le résultat de l'opération précédente. L'étape ET6 fournit le résultat :

$$SBOX'[E(R_{i-1}) \oplus M_i @ X_3] = SBOX[E(R_{i-1}) \oplus M_i] \# X_2 .$$

Ceci résulte de la définition même de l'opérateur non-linéaire SBOX'.
Une opération de permutation de bits P est ensuite appliquée à ce résultat (étape ET7). On obtient ainsi :

$$P[SBOX[E(R_{i-1}) \oplus M_i] \# X_2] = P[SBOX[E(R_{i-1}) \oplus M_i]] \# P(X_2) .$$

Au cours de l'étape ET8, le résultat de la permutation P est ensuite ajouté (par l'intermédiaire d'un OU-Exclusif) à la donnée $L'_{i-1}$ calculée au cours de la ronde précédente. On obtient alors :

$$P[SBOX[E(R_{i-1}) \oplus M_i]] \# P(X_2) \oplus L'_{i-1}$$
$$= [P(SBOX[E(R_{i-1}) \oplus M_i]) \# P(X_2)] \oplus L_{i-1} \& X_1$$
$$= [P[SBOX[E(R_{i-1}) \oplus M_i]] \oplus L_{i-1}] \& X_1 \# P(X_2)$$
$$= R_i \& X_1 \# P(X_2)$$

où $R_i$ est la partie droite de la $i^{ème}$ donnée actualisée ($L_i$, $R_i$) telle que définie dans le cadre du procédé DES connu. Là encore, toutes les égalités ci-dessus se déduisent du fait de la linéarité des opérateurs P, &, #.
L'étape ET9 suivante est une deuxième étape de démasquage, qui vise à supprimer du résultat de l'opération précédente, la contribution à ce résultat apportée par le paramètre de masquage $X_2$. Pour cela, l'opération suivante est réalisée :

$$[R_{i-1} \& X_1 \# P(X_2)] \#^{-1} V X_2$$
$$= [R_{i-1} \& X_1 \# P(X_2)] \#^{-1} P(X_2) = R_{i-1} \& X_1$$

A la fin de la $i^{ème}$ ronde, la donnée intermédiaire actualisée fournie est égale à ($L'_i$, $R'_i$), avec :

$$L'_i = R'_{i-1} = R_{i-1} \& X_1 = L_i \& X_1, \text{ et } R'_i = R_i \& X_1.$$

Ainsi, avec le procédé DES selon l'invention, la donnée intermédiaire ($L'_i$, $R'_i$) calculée lors de la $i^{ème}$ ronde d'opérations est égale à la donnée intermédiaire ($L_i$, $R_i$) fournie lors de la même ronde par un procédé DES connu non sécurisé, mais masquée par le paramètre aléatoire $X_1$ par l'intermédiaire de l'opérateur "&".
La nouvelle donnée intermédiaire ($L'_i$, $R'_i$) est ensuite fournie à la ronde suivante.
La $16^{ème}$, ronde du procédé fournit la $16^{ème}$ donnée intermédiaire ($L'_{16}$, $R'_{16}$). Au cours d'une troisième étape de démasquage final ET10, la contribution du paramètre $X_1$ à la $16^{ème}$ donnée est supprimée par l'intermédiaire de l'opérateur $\&^{-1}$ : $L_{16} = L'_{16} \&^{-1} X_1$, $R_{16} = R'_{16} \&^{-1} X_1$.
La permutation finale $IP^{-1}$, réalisée après l'étape ET10, termine le procédé DES selon l'invention. La permutation $IP^{-1}$ est identique à la permutation équivalente d'un procédé de type DES connu.

Avec le procédé DES selon l'invention, la donnée de sortie produite est la même que celle fournie par un procédé DES connu, pour autant que la donnée d'entrée ME et la clé secrète $K_0$ soient identiques pour le procédé connu et le procédé selon l'invention.

On notera par contre que dans le procédé selon l'invention (figure 3), et contrairement au procédé DES connu (figures 1, 2) :

- les données intermédiaires de type $(L'_i, R'_i)$ sont toutes masquées par le paramètre X1 (1er niveau de masquage) ; les données $(L'_i, R'_i)$ sont utilisées ou produites par les rondes de calcul.
- les résultats intermédiaires à l'intérieur d'une même ronde de calcul, produits en sortie d'une opération de type P, PC, E, Si, SBOX', $\oplus$, etc., sont tous masqués par au moins un des paramètres de masquages (X1, X2, X3) ou par une valeur dérivée (E(x1), P(X2), etc.) ; le deuxième niveau de masquage est ainsi correctement mis en oeuvre.

Comme $X_1$, $X_2$ ou $X_3$ sont choisis aléatoirement à chaque mise en oeuvre du procédé, la valeur de tous les résultats intermédiaires et de toutes les données intermédiaires est différente à chaque mise en oeuvre du procédé et ce quelle que soit la valeur de la donnée d'entrée $(L_0, R_0)$ ou la valeur de la clé secrète $K_0$ utilisée par le procédé de l'invention. En particulier, la valeur de tous les résultats intermédiaires est différente y compris dans le cas où le procédé est mis en oeuvre deux fois avec la même donnée d'entrée ME et la même clé secrète $K_0$.

La présence d'au moins un paramètre aléatoire supprime toute corrélation, au niveau d'un résultat ou d'une donnée intermédiaire, entre la clé secrète $K_0$ et la donnée d'entrée ME. Une analyse statistique de type DPA ne permet donc pas d'obtenir des informations sur la clé secrète utilisée par un procédé sécurisé selon l'invention.

Des modifications et / ou améliorations du procédé des figures 3a, 3b sont possibles, sans sortir du cadre de l'invention.

Par exemple, l'ordre de réalisation de certaines étapes du procédé peut être modifié :

- Les étapes IP, ET01, ronde 1, ..., ronde i, ..., ronde 16, ET10, IP$^{-1}$ doivent être exécutées dans l'ordre présentées sur les figures 3a, 3b si le procédé souhaité doit être similaire à celui des figures 1, 2.
- L'étape ET00 doit être effectuée avant l'étape ET01. L'étape ET00 peut être effectuée avant ou en parallèle avec l'étape IP.
- L'étape ET02 est réalisée entre l'étape ET00 et l'étape ET4 de la 1$^{ère}$ ronde d'opérations; elle peut être réalisée avant ou en parallèle avec l'étape IP, l'étape ET01, les étapes ET1 ou ET2.
- L'étape ET03 est réalisée entre l'étape ET00 et l'étape ET6 de la 1$^{ère}$ ronde d'opérations; elle peut être réalisée avant ou après l'étape IP, éventuellement en parallèle avec l'étape ET01, les étapes ET1, ET2, ET3 ou ET4. Pour des raisons de symétrie, l'étape ET10 sera réalisée après l'étape IP$^{-1}$ si l'étape ET01 est réalisée avant l'étape IP. Inversement, l'étape ET10 sera réalisée avant l'étape IP$^{-1}$ si l'étape ET01 est réalisée après l'étape IP.
- Dans chaque ronde i, l'étape ET1 doit être réalisée de sorte que la clé dérivée $M_i$ qu'elle fournit soit disponible pour la réalisation de l'étape ET5 ; l'étape ET1 peut être par exemple réalisée en parallèle avec les étapes ET2, ET3 ou ET4.

Dans l'exemple décrit ci-dessus en relation avec les figures 3a, 3b, trois paramètres aléatoires $X_1$, $X_2$, $X_3$ sont utilisés. Cette solution permet de masquer tous les résultats intermédiaires de la manière la plus efficace possible. Dans un autre exemple, il est possible d'utiliser uniquement deux paramètres, les paramètres $X_1$, $X_2$. Dans ce cas, l'étape ET02 est limitée au calcul de $P(X_2)$, les étapes ET3, ET4 de toutes les rondes d'opérations sont supprimées, et l'étape ET03 est modifiée pour calculer un nouvel opérateur non linéaire SBOX" par la relation :

$$\text{SBOX"} = \text{FCT"}(\text{SBOX}, X_1, X_2),$$

avec FCT" une fonction telle que

$$\text{SBOX"}(A \& E(X_1)) = \text{SBOX}(A) \# X_2.$$

Là encore, tous les résultats intermédiaires sont masqués par un paramètre aléatoire, ce paramètre aléatoire étant modifié à chaque mise en oeuvre du procédé. En particulier, dans la ronde de rang i, en sortie de l'étape ET2, le résultat intermédiaire $E(R'_0) = E(R_0)\&E(X_1)$ est masqué par le paramètre dérivé $E(X_1)$. De la même façon, en sortie de l'étape ET5, le résultat intermédiaire $E(R'_0) \oplus M_i$ est masqué par le paramètre dérivé $E(X_1)$. En sortie de l'étape ET6, le résultat intermédiaire est masqué comme dans l'exemple précédent par le paramètre $X_2$.

De même, dans l'exemple décrit ci-dessus en relation avec les figures 3a, 3b, les trois paramètres $X_1$, $X_2$, $X_3$ sont choisis aléatoirement, à chaque mise en oeuvre du procédé. Cependant, il est possible de modifier les paramètres $X_1$, $X_2$, $X_3$ plus ou moins souvent. Par exemple, il est possible de modifier les paramètres, notamment $X_2$ et / ou $X_3$ à chaque réalisation d'une ronde i d'opérations. Dans ce cas, les étapes ET02, ET03 seront réalisées à chaque ronde pour prendre en compte les paramètres $X_2$, $X_3$ modifiés.

Dans le même esprit, il est possible de modifier les paramètres $X_1$, $X_2$, $X_3$ toutes les M exécutions du procédé, si on estime que M réalisations ne sont pas suffisantes pour réaliser une attaque de type DPA. M est un nombre entier. Dans ce cas, seule l'étape ET01 est réalisée au cours de l'étape ET0. Les étapes ET00, ET02, ET03 sont réalisée seulement toutes les M mises en oeuvre du procédé.

Une autre amélioration importante permet de sécuriser le procédé également contre les analyses de type SPA. Pour ce type d'analyse, les étapes de calcul de clé dérivée $M_i$ sont particulièrement sensibles. L'amélioration consiste donc à masquer les clés dérivées, en plus des résultats intermédiaires.

Le procédé des figures 3a, 3b est alors amélioré par l'ajout (voir figure 4):

- des sous-étapes ET05, ET06 dans l'étape ET0 d'initialisation,
- des étapes ET11, ET12 dans chacune des 16 rondes d'opérations du procédé.

Par souci de clarté et de simplification, seule la $i^{\text{ème}}$ ronde du procédé a été représentée sur la figure 4, accompagnée des nouvelles étapes ET05, ET06.

Au cours de l'étape ET05, un quatrième paramètre $Y_0$ est choisi de manière aléatoire. L'étape ET05 est par exemple réalisée simultanément avec l'étape ET00, ou bien en parallèle avec l'une des étapes IP, ET01, ET02, ET03.

Au cours de l'étape ET06- de masquage, effectuée après l'étape ET05, le quatrième paramètre de masquage $Y_0$ est mélangé à la clé secrète $K_0$, pour fournir une clé secrète masquée $K'_0$. Le mélange se fait par la relation suivante :

$$K'_0 \ = \ K_0 \ | \ Y_0$$

L'opérateur " | " est choisi de préférence linéaire par rapport aux deux variables qu'il mélange. Dans un mode de réalisation, l'opérateur " | " est un OU-Exclusif. L'opérateur " | " peut également être tout type d'opérateur linéaire. De manière générale, l'opérateur " | " a des propriétés similaires à celles des opérateurs " & ", " @ " ou " # ".

La $1^{\text{ère}}$ ronde d'opérations (non représentée figure 4) est ensuite réalisée. L'étape ET1 de calcul de clé est réalisée ici non plus directement à partir de la clé secrète $K_0$, mais à partir de la clé secrète masquée $K'_0$. L'étape ET1 fournit une clé dérivée masquée $M'_1$ selon la relation :

$$M'_1 \ = \ PC(S_1(K'_0)) \ = \ PC(S_1(K_0 \ | \ Y_0))$$
$$= \ PC(S_1(K_0)) \ | \ PC(S_1(Y_0)).$$

La dernière égalité se déduit simplement du fait que les opérateurs PC, $S_1$ et " | " sont des opérateurs linéaires et ont donc notamment des propriétés de type commutatif ou associatif.

Comme $PC(S_1(K_0)) = M_1$, on en déduit finalement que $M'_1 = M_1 | PC(S_1(Y_0))$, $M_i$ étant la clé dérivée calculée selon le procédé décrit en relation avec les figures 3a, 3b.

L'étape ET11 de calcul de différence est effectuée par exemple avant, en parallèle ou après l'étape ET1 de calcul de clé. L'étape ET11 détermine la contribution $C_1$ apportée par le paramètre $Y_0$ à la clé dérivée masquée $M'_1$.

L'étape ET11 est similaire à l'étape ET1 ; l'étape ET11 comprend ainsi une opération $S_1$ pour fournir un paramètre de masquage $Y_1 = S_1(Y_0)$ actualisé par décalage des bits de $Y_0$, et une opération PC pour calculer la contribution $C_1$. La contribution $C_1$ est ainsi calculée selon la relation : $C_1 = PC(S_1(Y_0))$. On en déduit finalement $M'_1 = M_1 | C_1$. Le paramètre de masquage $Y_1$ actualisé est quant à lui fourni à la ronde d'opérations suivante.

L'étape ET12 de démasquage est une sous-étape de la transformation F" (qui correspond à la transformation F' du procédé DES selon les figures 3a, 3b, modifiée par l'ajout de l'étape ET12) ; dans l'exemple de la figure 4, l'étape ET12 est effectuée entre l'étape ET5 et l'étape ET6. L'étape ET12 vise à enlever la contribution $C_1$ apportée par le paramètre de masquage actualisé $Y_1$. Pour cela, l'opérateur "$|^{-1}$" inverse de l'opérateur " | " est utilisé. En sortie de l'étape ET12, on a :

$$(E(R_0)@X_3 \oplus M'_1 \mid^{-1} C_1$$
$$= E(R_0)@X_3 \oplus M_1 \mid C_1 \mid^{-1} C_1 = E(R_0)@X_3 \oplus M_1$$

Ainsi, après suppression de la contribution $C_1$, la variable qui apparaît à l'entrée de l'opérateur de type SBOX' (étape ET6) est égale à $E(R_0)@X_3 \oplus M_1$, c'est-à-dire qu'elle est identique à la variable qui apparaît à l'entrée de l'opérateur SBOX' du procédé décrit en relation avec les figures 3a, 3b.

En conséquence, la donnée de sortie qui apparaît en sortie de la transformation F'' est identique à celle qui apparaît en sortie de la transformation F' du procédé des figures 3a, 3b.

Plus généralement, lors de la $i^{\text{ème}}$ ronde d'opérations, l'étape ET1 fournit une clé dérivée masquée $M'_i$ selon la relation :

$$M'_i = PC(S_i(K'_{i-1})) = PC(S_i(K_{i-1} \mid Y_{i-1}))$$
$$= PC(S_i(K_{i-1})) \mid PC(S_i(Y_{i-1}))$$
$$= M'_i = M_i \mid PC(S_i(Y_{i-1}),$$

$M_i$ étant la clé dérivée calculée selon le procédé décrit en relation avec les figures 3a, 3b.

Rappelons que les opérateurs PC sont identiques pour toutes les rondes du procédé (mêmes caractéristiques, mêmes paramètres, etc.). Par contre, les opérations $S_i$ de décalage de bits sont différentes d'une ronde d'opérations à l'autre.

L'étape ET11 détermine la contribution $C_i$ apportée par le paramètre $Y_{i-1}$ (ou plus généralement $Y_0$) à la clé dérivée masquée $M'_i$. L'étape ET11 fournit un paramètre de masquage $Y_i = S_i(Y_{i-1})$ actualisé, et une contribution $C_i$ actualisée selon la relation : $C_i = PC(S_i(Y_{i-1}))$. On en déduit finalement $M'_i = M_i \mid C_i$. Le paramètre de masquage $Y_i$ actualisé est quant à lui fourni à la ronde d'opérations suivante.

L'étape ET12 est effectuée entre l'étape ET5 et l'étape ET6. En sortie de l'étape ET12, on a :

$$(E(R_{i-1})@X_3 \oplus M'_i \mid^{-1} C_i$$
$$= E(R_{i-1})@X_3 \oplus M_i \mid C_i \mid^{-1} C_i = E(R_{i-1})@X_3 \oplus M_i$$

Ainsi, après suppression de la contribution $C_i$, la variable qui apparaît à l'entrée de l'opérateur de type SBOX' (étape ET6) est égale à $PE(R_{i-1})@X_3 + M_i$, c'est-à-dire qu'elle est identique à la variable qui apparaît à l'entrée de l'opérateur SBOX' du procédé décrit en relation avec les figures 3a, 3b. La donnée de sortie qui apparaît en sortie de l'étape de transformation F' est donc identique à celle qui apparaît en sortie de l'opération de transformation F' du procédé des figures 3a, 3b.

Finalement, avec le procédé de la figure 4, tous les résultats intermédiaires sont masqués par l'un au moins des paramètres $X_1$, $X_2$, $X_3$ (ou une forme dérivée de ces paramètres). De plus, toutes les clés intermédiaires $K'_i$, toutes les clés dérivées $M'_i$ sont également masquées par le paramètre $Y_0$ ou une forme dérivée de $Y_0$.

**Revendications**

1. Procédé de calcul cryptographique sécurisé comprenant N rondes de calcul réalisées successivement pour obtenir une donnée de sortie à partir d'une donnée d'entrée et d'une clé secrète, procédé au cours duquel :

- on réalise un premier niveau de masquage, pour masquer la donnée d'entrée, de sorte que chaque donnée intermédiaire utilisée ou produite par une ronde de calcul soit masquée, **caractérisé en ce que**
- on réalise un deuxième niveau de masquage, pour masquer des données manipulées à l'intérieur de chaque ronde de calcul, en réalisant successivement les étapes suivantes :

- une deuxième étape (ET3) de masquage d'un résultat d'une étape précédente (ET2) de la ronde de calcul de rang i,
- une étape (ET6) de substitution du résultat masqué obtenu par la deuxième étape (ET3) à l'aide d'un opérateur non linéaire masqué (SBOX'),
- une deuxième étape (ET9) de démasquage du résultat de l'étape (ET6) de substitution.

les résultats intermédiaires à l'intérieur de chaque ronde de calcul étant tous masqués.

2. Procédé selon la revendication 1, **caractérisé en ce qu'**il comprend :

- une première étape de masquage (ET01) de la donnée d'entrée (ME), réalisée avant une première ronde de calcul, et
- une première étape de démasquage (ET10) du résultat de la $N^{ème}$ ronde de calcul pour produire la donnée de sortie, les étapes (ET01) et (ET10) réalisant le premier niveau de masquage.

3. Procédé selon la revendication 2, **caractérisé en ce que** :

- lors de la première étape de masquage (ET01), un premier paramètre de masquage ($X_1$) est mélangé à la donnée d'entrée (ME), pour fournir une donnée d'entrée masquée (ME'; $L'_0$, $R'_0$) à la première ronde de calcul, le mélange étant réalisé par l'utilisation d'un premier opérateur de mélange ("&") linéaire,
- lors de la première étape de démasquage (ET10), la contribution apportée par le premier paramètre de masquage ($X_1$) au résultat de la $N^{ème}$ ronde de calcul est soustraite du résultat'de la $N^{ème}$ ronde de calcul.

4. Procédé selon l'une des revendications 2 à 3, **caractérisé en ce qu'**il comprend également :

- une troisième étape de masquage (ET03), réalisée avant la première ronde de calcul, pour fournir l'opérateur non linéaire masqué (SBOX') vérifiant la relation suivante, pour toute donnée A :

$$SBOX'(A@X_3) = SBOX(A)\#X_2,$$

où
$X_2$ est un deuxième paramètre de masquage, $X_3$ est un troisième paramètre de masquage,
SBOX est un opérateur non linéaire connu,
" # " est un deuxième opérateur de mélange, et "@ " est un troisième opérateur de mélange.

5. Procédé selon la revendication 4, **caractérisé en ce que**, au cours de l'étape (ET9) de démasquage de la ronde de calcul de rang i, on enlève la contribution apportée par le deuxième paramètre de masquage ($X_2$) au résultat produit par l'opérateur non linéaire masqué (SBOX').

6. Procédé selon l'une des revendications 2 à 5, **caractérisé en ce que** la ronde de calcul de rang i comprend les étapes suivantes, exécutées dans l'ordre :

- une étape (ET2) d'expansion d'une partie droite ($R'_{i-1}$) d'une donnée intermédiaire masquée calculée par une précédente ronde de calcul,
- la deuxième étape de masquage (ET3), au cours de laquelle on masque le résultat de l'étape (ET2) précédente par le troisième paramètre de masquage ($X_3$) en utilisant le troisième opérateur de masquage ("@"),
- une étape (ET4) au cours de laquelle on supprime la contribution apportée par le premier paramètre de masquage au résultat de l'étape (ET3) précédente,
- une étape (ET5) de mélange du résultat de l'étape précédente ET4 avec une clé dérivée actualisée ($M_i$),
- l'étape (ET6) de substitution du résultat de l'étape (ET5) précédente par l'opérateur non linéaire masqué (SBOX), et fourniture d'un résultat masqué par le deuxième paramètre de masquage ($X_2$),
- une étape (ET7) de permutation du résultat de l'étape ET6 précédente,
- une étape (ET8) d'addition, par l'intermédiaire d'un OU-Exclusif, d'une partie gauche ($L'_{i-1}$) de la donnée intermédiaire précédemment calculée au résultat de l'étape précédente,
- la deuxième étape (ET9) au cours de laquelle on supprime la contribution apportée par le deuxième paramètre de masquage au résultat de l'étape précédente, pour fournir une partie droite ($R'_i$) de la donnée intermédiaire ($L'_i$, $R'_i$) actualisée dont une partie gauche ($L'_i$) est égale à la partie droite ($R'_{i-1}$) de la donnée intermédiaire

($L'_{i-1}$, $R'_{i-1}$) précédemment calculée.

**7.** Procédé selon l'une des revendications 2 à 6, **caractérisé en ce que** au moins l'un des paramètres ($X_1$, $X_2$, $X_3$) de masquage est choisi aléatoirement à chaque mise en oeuvre du procédé.

**8.** Procédé selon l'une des revendications 2 à 6, **caractérisé en ce que** au moins l'un des paramètres de masquage ($X_1$, $X_2$, $X_3$) est choisi aléatoirement toutes les M mises en oeuvres du procédé.

**9.** Procédé selon l'une des revendications 2 à 8, **caractérisé en ce que** le premier opérateur de mélange ("&") et/ou le deuxième opérateur de mélange ("#") et/ou le troisième opérateur de mélange ("@") est (sont) un (des) opérateur (s) de type OU-Exclusif.

**10.** Procédé selon l'une des revendications 2 à 9, comprenant une étape de calcul de clé dérivée (ET1), pour fournir une clé dérivée actualisée à partir de la clé secrète ($K_0$) selon une loi de calcul de clé connue, le procédé étant **caractérisé en ce qu'**il comprend également une quatrième étape de masquage (ET06), effectuée avant l'étape de calcul de clé dérivée (ET1), pour masquer la clé secrète ($K_0$) par un paramètre de mélange ($Y_0$), de sorte que la clé dérivée actualisée ($M'_1$, $M'_i$) soit différente à chaque mise en oeuvre du procédé.

**11.** Procédé selon la revendication 10, **caractérisé en ce qu'**il comprend N étapes de calcul de clé dérivée (ET1) exécutées successivement, l'étape de calcul de clé dérivée de rang i fournissant une clé dérivée actualisée masquée ($M'_i$) à la ronde de calcul (ronde i) de même rang i et une clé secrète masquée actualisée ($K'_i$) à partir d'une clé ($K'_{i-1}$) secrète masquée précédemment calculée, et **en ce que** la ronde de calcul de rang i comprend notamment les étapes (ET5) et (ET12) suivantes, réalisées entre l'étape (ET3) et l'étape (ET6) :

(ET5) : mélange d'un résultat de l'étape précédente avec la clé dérivée actualisée masquée ($M'_i$) de rang i,
(ET12) : suppression de la contribution ($C_i$) apportée par le paramètre de mélange ($Y_0$) au résultat de l'étape (ET5).

**12.** Procédé selon la revendication 11, **caractérisé en ce que** la quatrième étape de masquage (ET06) est réalisée avant la première étape de calcul de clé dérivée.

**13.** Procédé selon la revendication 11, **caractérisé en ce que** la quatrième étape de masquage (ET06) est réalisée'avant chaque étape de calcul de clé (ET1).

**14.** Procédé selon l'une des revendications 10 à 13, **caractérisé en ce que**, lors de la quatrième étape de masquage (ET06), le paramètre de mélange ($Y_0$) choisi aléatoirement est mélangé à la clé secrète ($K_0$) par l'intermédiaire d'un quatrième opérateur de masquage (" | "), pour fournir une clé secrète masquée ($K'_0$), la clé dérivée ($M'_1$, $M'_i$) masquée étant calculée à partir de la clé secrète masquée ($K'_0$).

**15.** Procédé selon la revendication 14, **caractérisé en ce que**, au cours de la quatrième étape de masquage (ET06), l'opération suivante est réalisée :

$$K'_0 = K_0 \mid Y_0,$$

$K'_0$ étant la clé secrète masquée,
$K_0$ étant la clé secrète
$Y_0$ étant le quatrième paramètre de masquage, et
" | " étant le quatrième opérateur de mélange.

**16.** Procédé selon l'une des revendications 14 à 15, **caractérisé en ce que** le quatrième opérateur de mélange (" |") est un opérateur OU-Exclusif.

**17.** Composant électronique, **caractérisé en ce qu'**il comprend des moyens adaptés pour mettre en oeuvre le procédé de calcul cryptographique selon l'une des revendications 1 à 16.

**Claims**

1. Secure cryptographic computation method comprising N computation rounds performed successively in order to obtain an output data item from an input data item and a secret key, a method during which:

   - a first masking level is produced in order to mask the input data item, so that each intermediate data item used or produced by a computation round is masked, **characterised in that**
   - a second masking level is produced in order to mask data manipulated within each computation round, by successively performing the following steps:
   - a second step (ET3) or masking a result of a previous step (ET2) of the i-rankling computation round,
   - a step (ET6) of substituting the masked result obtained by the second step (ET3) by means of a masked non-linear operator (SBOX');
   - a second step (ET9) of unmasking the result of the substitution step (ET6),

   the intermediate results within each computation round all being masked.

2. Method according to claims 1, **characterised in that** it comprises:

   - a first step (ET01) of masking the input data item (ME), performed before a first computation round, and
   - a first step (ET10) of unmasking the result of the $N^{th}$ computation round in order to produce the output data item, the steps (ET01) and (ET10) producing he first masking level.

3. Method according to claim 2, **characterised in that**:

   - during the first masking step (ET01), a first masking parameter $(X_1)$ is mixed with the input data item (ME), in order to supply a masked input data item (ME'; $L'_0$, $R'_0$) at the first computation round, the mixing being performed by the use of a first linear mixing operator ("&"),
   - during the first unmasking step (ET10), the contribution made by the first masking parameter (X1) to the result of the $N^{th}$ computation round is subtracted from the result of the $N^{th}$ computation round.

4. Method according to one of claims 2 to 3, **characterised in that** it also comprises:

   - a third masking step (ET03), performed before the first computation round, in order to supply the masked nonlinear operator (SBOX') satisfying the following equation, for any data item A:

$$\text{SBOX' } (A@X_3) = \text{SBOX}(A)\#X_2,$$

   where $X_2$ is a second masking parameter, X3 is a third masking parameter, SBOX is a known non linear operator, "#" is a second mixing operator, and "@" is a third mixing operator.

5. Method according to claim 4, **characterised in that**, during the unmasking step (ET9) of the i-ranking computation round, the contribution made by the second masking parameter (X2) to the result produced by the masked non-linear operator (SBOX') is taken away.

6. Method according to one of claims 2 to 5, **characterised in that** the i-ranking computation round comprises the following steps, executed in the following order:

   - a step (ET2) of expansion of a right-hand part $(R'_{i-1})$ of a masked intermediate data item calculated by a previous computation round,
   - - the second masking step (ET3), during which the result of the previous step (ET2) is masked by the third masking parameter $(X_3)$ using the third masking operator ("@"),
   - a step (ET4) during which the contribution made by the first masking parameter to the result of the previous step (ET3) is eliminated,
   - a step (ET5) of mixing the result of the previous step (et4) with an updated derived key $(M_i)$,
   - the step (ET6) of replacing the result of the previous step (ET5) with the masked non-linear operator (SBOX'), and supplying a result masked by the second masking parameter $(X_2)$,

- a step (ET7) of permutation of the result of the previous step (ET6),
- a step (ET8) of adding, by means of an exclusive-OR operation, a left-hand part ($L'_{i-1}$) of the previously calculated intermediate data item to the result of the previous step,
- - the second step (ET9) during which the contribution made by the second masking parameter to the result of the previous step is eliminated in order to supply a right-, hand part ($R'_i$) of the updated intermediate data item ($L'_i$, $R'_i$), a left-hand part ($L'_i$) of which is equal to the right-hand part ($R'_{i-1}$) of the intermediate data item ($L'_{i-1}$, $R'_{i-1}$) previously calculated.

7. Method according to one of claim 2 to 6, **characterised in that** at least one of the masking parameters ($X_1$, $X_2$, $X_3$) is chosen randomly at each implementation of the method.

8. Method according to one of claims 2 Lo 6, **characterized in that** at least one of the masking parameters ($X_1$, $X_2$, $X_3$) is chosen randomly every N implementation of the method.

9. Method according to one of claims 2 to 8, **characterized in that** the first mixing operator ("&") and/or the second mixing operator ("#") and/or the third mixing operator ("@") is (are) an operator or operators of the exclusive-OR type.

10. Method according to one of claims 2 to 9, comprising a derived key computation step (ET1), for supply an updated derived key from the secret key ($K_0$) according to a known key computation law, the method being **characterised in that** it also comprises a fourth masking step (ET06), performed before the derived key computation step (ET1), in order to mask the secret key ($K_0$) by a mixing parameter ($Y_0$), so that the updated derived key ($M'_1$, $M'_i$) is different at each implementation of the method.

11. Method according to claim 10, **characterised in that** it comprises N derived key computation steps (ET1) performed successively, the i-ranking derived key computation step supplying an updated masked derived key ($M'_1$) at the computation round (round i) of the same rank i and an updated masked secret key ($K'_i$) from a previously calculated masked secret key ($K'_{i-1}$), and **in that** the i-ranking computation round comprises in particular the following steps (ET5) and (ET12), performed between step (ET3) and step (ET6):

     (ET5): mixing a result of the previous step with the i-ranking masked updated derived key ($M'_i$),
     (ET12): elimination of the contribution (C1) made by the mixing parameter (Y0) to the result of step (ET5)

12. Method according to claims 11, **characterised in that** the fourth masking step (ET06) is performed before the first derived key computation step.

13. Method according to claim 11, **characterised in that** the fourth masking step (ET06) is performed before each key computation step (ET1)

14. Method according to one of claims 10 to 13, **characterised in that**, during the fourth masking step (ET06), the mixing parameter ($Y_0$) chosen randomly is mixed with the secret key ($K_0$) by means of a fourth masking operator ("|"), in order to supply a masked secret key ($K'_0$), the masked derived key ($M'_1$, $M'_i$) being calculated from the masked secret key ($K'_0$).

15. Method according to claim 14, **characterised in that**, during the fourth masking step (E106), the following operation is performed:

$$K'_0 = K_0 \mid Y_0$$

$K'_0$ being the masked secret key,
$K_0$ being the secret key
$Y_o$ being the fourth masking parameter, and
"|" being the fourth mixing operator

16. Method according to one of claims 14 to 15, **characterised in that** the fourth mixing operator ("|") is an exclusive-OR operator.

**17.** Electronic component, **characterised in that** it comprises means adapted to implement the cryptographic computation method according to one of claims 1 to 16.

**Patentansprüche**

**1.** Verfahren zur gesicherten verschlüsselten Berechnung mit N hintereinander durchgeführten Berechnungsrunden zum Erhalt von Ausgangsdaten anhand von Eingangsdaten und eines geheimen Schlüssels, wobei während des Verfahrens:

- eine erste Maskierungsstufe durchgeführt wird, um die Eingangsdaten derart zu maskieren, dass alle von einer Berechnungsrunde verwendeten oder erzeugten Zwischendaten maskiert werden, **dadurch gekennzeichnet, dass**
- eine zweite Maskierungsstufe durchgeführt wird, um die innerhalb jeder Berechnungsrunde behandelten Daten zu maskieren, indem hintereinander die folgenden Schritte durchgeführt werden:
- ein zweiter Schritt (ET3) zur Maskierung eines Ergebnisses aus einem vorherigen Schritt (ET2) der Berechnungsrunde mit dem Rang i,
- ein Schritt (ET6) zur Substitution des aus dem zweiten Schritt (ET3) erhaltenen maskierten Ergebnisses mit Hilfe eines maskierten, nicht linearen Operators (SBOX'),
- ein zweiter Schritt (ET9) zur Demaskierung des Ergebnisses aus dem Substitutionsschritt (ET6),

wobei die innerhalb jeder Berechnungsrunde Zwischenergebnisse alle maskiert sind.

**2.** Verfahren gemäß Anspruch 1, **dadurch gekennzeichnet, dass** es aufweist:

- einen ersten Schritt zur Maskierung (ET01) der Eingangsdaten (ME), der vor einer ersten Berechnungsrunde durchgeführt wird, und
- einen ersten Schritt zur Demaskierung (ET10) des Ergebnisses aus der Nten Berechnungsrunde, und die Ausgangsdaten zu erzeugen, wobei die Schritte (ET01) und (ET10) die erste Maskierungsstufe durchführen.

**3.** Verfahren gemäß Anspruch 2, **dadurch gekennzeichnet, dass**:

- während des ersten Maskierungsschrittes (ET01) ein erster Maskierungsparameter ($X_1$) unter die Eingangsdaten (ME) gemischt wird, um der ersten Berechnungsrunde maskierte Eingangsdaten (ME'; $L'_0$, $R'_0$) zu liefern, wobei die Vermischung durch Einsatz eines ersten linearen Mischoperators zu durchgeführt wird,
- während des ersten Demaskierungsschrittes (ET10) der von dem ersten Maskierungsparameter ($X_1$) dem Ergebnis der Nten Berechnungsrunde hinzugefügte Beitrag von dem Ergebnis der Nten Berechnungsrunde abgezogen wird.

**4.** Verfahren gemäß einem der Ansprüche 2 bis 3, **dadurch gekennzeichnet, dass** es ebenfalls aufweist:

- einen dritten Maskierungsschritt (ET03), der vor der ersten Berechnungsrunde durchgeführt wird, um den maskierten, nicht linearen Operator (SBOX') zu liefern, wobei die folgende Beziehung für alle Daten A überprüft wird:

$$\text{SBOX'}(A @ X_3) = \text{SBOX}(A) \# X_2,$$

wobei
$X_2$ ein zweiter Maskierungsparameter ist, $X_3$ ein dritter Maskierungsparameter ist, SBOX ein bekannter nicht linearer Operator ist,
"#" ein zweiter Mischoperator ist und "@" ein dritter Mischoperator ist.

**5.** Verfahren gemäß Anspruch 4, **dadurch gekennzeichnet, dass** im Verlauf des Demaskierungsschrittes (ET9) der Berechnungsrunde mit dem Rang i der Beitrag entfernt wird, der dem durch den maskierten nicht linearen Operator (SBOX') erzeugten Ergebnis von dem zweiten Maskierungsparameter ($X_2$) hinzugefügt wurde.

**6.** Verfahren gemäß einem der Ansprüche 2 bis 5, **dadurch gekennzeichnet, dass** die Berechnungsrunde mit dem Rang i die folgenden Schritte aufweist, die in dieser Reihenfolge ausgeführt werden:

- einen Erweiterungsschritt (ET2) für einen rechten Teil ($R'_{i-1}$) von maskierten Zwischendaten, die von einer vorherigen Berechnungsrunde berechnet wurden,
- den zweiten Masiderungsschritt (ET3), im Verlauf dessen das Ergebnis des vorherigen Schrittes (ET2) durch den dritten Maskierungsparameter ($X_3$) maskiert wird, indem der dritte Maskierungsoperator ("@") eingesetzt wird,
- einen Schritt (ET4), im Verlauf dessen der Beitrag unterdrückt wird, der dem Ergebnis des vorherigen Schrittes (ET3) durch den ersten Maskierungsparameter hinzugefügt wurde,
- einen Schritt (ET5) zum Vermischen des Ergebnisses des vorherigen Schrittes (ET4) mit einem aktualisierten abgeleiteten Schlüssel ($M_i$),
- den Schritt (ET6) zur Substitution des Ergebnisses des vorherigen Schrittes (ET5) durch den maskierten nicht linearen Operator (SBOX') und Lieferung eines durch den zweiten Maskierungsparameter ($X_2$) maskierten Ergebnisses,
- einen Schritt (ET7) zur Permutation des Ergebnisses des vorherigen Schrittes (ET6),
- einen Schritt (ET8) zur Addition eines linken Teils ($L'_{i-1}$) der zuvor berechneten Zwischendaten zu dem Ergebnis des vorherigen Schrittes mit Hilfe eines exklusiven ODER,
- den zweiten Schritt (ET9), im Verlauf dessen der durch den zweiten Maskierungsparameter dem Ergebnis des vorherigen Schrittes hinzugefügte Beitrag unterdrückt wird, um einen rechten Teil ($R'_i$) der aktualisierten Zwischendaten ($L'_i$, $R'_i$) zu liefern, von denen ein linker Teil ($L'_i$) gleich dem rechten Teil ($R'_{i-1}$) der zuvor berechneten Zwischendaten ($L'_{i-1}$, $R'_{i-1}$) ist.

**7.** Verfahrens gemäß einem der Ansprüche 2 bis 6, **dadurch gekennzeichnet, dass** zumindest der eine der Maskierungsparameter ($X_1$, $X_2$, $X_3$) bei jeder Durchführung des Verfahrens zufällig ausgewählt wird.

**8.** Verfahren gemäß einem der Ansprüche 2 bis 6, **dadurch gekennzeichnet, dass** zumindest der eine der Maskierungsparameter ($X_1$, $X_2$, $X_3$) alle M Durchführungen des Verfahrens zufällig ausgewählt wird.

**9.** Verfahren gemäß einem der Ansprüche 2 bis 8, **dadurch gekennzeichnet, dass** der erste Mischoperator ("&") und/oder der zweite Mischoperator ("#") und/oder der dritte Mischoperator ("@") ein Operator/Operatoren der Art exklusives ODER ist/sind.

**10.** Verfahren gemäß einem der Ansprüche 2 bis 9 mit einem Schritt zur Berechnung des abgeleiteten Schlüssels (ET1), um einen aktualisierten abgeleiteten Schlüssel an hand des geheimen Schlüssels ($K_0$) gemäß einem bekannten Schlüsselberechnungsgesetz zu liefern, wobei das Verfahren **dadurch gekennzeichnet ist, dass** es ebenfalls einen vierten Maskierungsschritt (ET06) umfasst, der vor dem Schritt zur Berechnung des abgeleiteten Schlüssels (ET1) durchgeführt wird, um den geheimen Schlüssel ($K_0$) durch einen Mischparameter ($Y_0$) derart zu maskieren, dass der aktualisierte abgeleitete Schlüssel ($M'_1$, $M'_i$) bei jeder Durchführung des Verfahrens unterschiedlich ist.

**11.** Verfahren gemäß Anspruch 10, **dadurch gekennzeichnet, dass** es N hintereinander durchgeführte Berechnungsschritte für den abgeleiteten Schlüssel (ET1) aufweist, wobei der Schritt zur Berechnung des abgeleiteten Schlüssels mit dem Rang i einen maskierten, aktualisierten, abgeleiteten Schlüssel ($M'_i$) in der Berechnungsrunde (Runde i) mit dem gleichen Rang i und einen aktualisierten, maskieren, geheimen Schlüssel ($K'_i$) an hand eines zuvor berechneten, maskierten, geheimen Schlüssels ($K'_{i-1}$) liefert, und dass die Berechnungsrunde mit dem Rang i insbesondere die nachfolgenden Schritte (ET5) und (ET12) aufweist, die zwischen dem Schritt (ET3) und dem Schritt (ET6) durchgerührt werden:

(ET5): Mischung eines Ergebnisses des vorherigen Schrittes mit dem maskierten, aktualisierten, abgeleiteten Schlüssel ($M'_i$) mit dem Rang i,
(ET12): Unterdrückung des Beitrags ($C_i$), der durch den Mischparameter ($Y_0$) dem Ergebnis des Schrittes (ET5) hinzugefügt wurde.

**12.** Verfahren gemäß Anspruch 11, **dadurch gekennzeichnet, dass** der vierte Maskierungsschritt (ET06) vor dem ersten Berechnungsschritt für den abgeleiteten Schlüssel durchgeführt wird.

**13.** Verfahren gemäß Anspruch 11, **dadurch gekennzeichnet**, das der vierte Maskierungsschritt (ET06) vor jedem Schlüsselberechnungsschritt (ET1) durchgeführt wird.

14. Verfahren gemäß einem der Ansprüche 10 bis 13, **dadurch gekennzeichnet, dass** während des vierten Maskierungsschrittes (ET6) der zufällig gewählte Mischparameter ($Y_0$) mit Hilfe eines vierten Mischoperators ("| ") mit dem geheimen Schlüssel ($k_0$) vermischt wird, um einen maskierten geheimen Schlüssel ($K'_0$) zu liefern, wobei der maskierte abgeleitete Schlüssel ($M'_1$, $M'_i$) an hand des maskierten geheimen Schlüssels ($K'_0$) berechnet wird.

15. Verfahren gemäß Anspruch 14, **dadurch gekennzeichnet, dass** im Verlauf des vierten Maskierungsschrittes (ET06) die folgende Operation durchgeführt wird:

$$K'_0 = K_0 | Y_0,$$

wobei $K'_0$ der maskierte geheime Schlüssel ist,
wobei $K'_0$ der geheime Schlüssel ist,
wobei $Y_0$ der vierte Maskierungsparameter ist, und wobei " | " der vierte Mischoperator ist.

16. Verfahren gemäß einem der Ansprüche 14 bis 15, **dadurch gekennzeichnet, dass** der vierte Mischoperator ("| ") ein exklusiver ODER-Operator ist.

17. Elektronischer Baustein, **dadurch gekennzeichnet, dass** er Vorrichtungen aufweist zur Durchführung des verschlüsselten Berechnungsverfahrens gemäß einem der Ansprüche 1 bis 16.

donnée d'entrée

IP

L0

R0

F ← $M_1$   } ronde 1

⊕

L1 = R0

R1

F ← $M_2$   } ronde 2

⊕

L2 = R1

R2

L15 = R14

R15

F ← $M_{16}$   } ronde 16

⊕

L16 = R15

IP⁻¹

R16

donnée de sortie

**Fig. 1 (art antérieur)**

F ⌐

$R_{i-1}$

$K_{i-1}$

E

ET ⌐

$E(R_{i-1})$

$S_i$

⊕ ← $M_i$ ← PC ←

$E(R_{i-1}) + M_i$

$K_i$

SBOX

P

$F(R_{i-1}) = P(SBOX(E(R_{i-1})+M_i))$

$L_{i-1}$ → ⊕

$R_i$

**Fig. 2 (art antérieur)**

**Fig. 3a**

Fig. 3b

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0046953 A

- WO 0041356 A